(19) Europäisches Patentamt
European Patent Office
Office européen des brevets

(11) EP 0 581 729 B1

(12) EUROPÄISCHE PATENTSCHRIFT

(45) Veröffentlichungstag und Bekanntmachung des Hinweises auf die Patenterteilung:
**03.06.1998 Patentblatt 1998/23**

(51) Int Cl.[6]: **C09B 62/503**, C09B 62/09, C09B 62/25

(21) Anmeldenummer: **93810503.8**

(22) Anmeldetag: **14.07.1993**

# (54) Reaktivfarbstoffe, Verfahren zu deren Herstellung und deren Verwendung

Reactive dyes, process for their manufacture and their use

Colorants réactifs, procédé pour leur préparation et leur utilisation

(84) Benannte Vertragsstaaten:
**BE CH DE ES FR GB IT LI PT**

(30) Priorität: **23.07.1992 CH 2316/92**

(43) Veröffentlichungstag der Anmeldung:
**02.02.1994 Patentblatt 1994/05**

(73) Patentinhaber: **Ciba Specialty Chemicals Holding Inc.**
**4057 Basel (CH)**

(72) Erfinder:
- **Klier, Herbert**
  **D-7812 Bad Krozingen-Biengen (DE)**
- **Tzikas, Athanassios, Dr.**
  **CH-4133 Pratteln (CH)**

(56) Entgegenhaltungen:
**EP-A- 0 167 858**

- **PATENT ABSTRACTS OF JAPAN vol. 10, no. 85 (C-336) 4. April 1986 & JP-A-60 217 269 (SUMITOMO) 30. Oktober 1985**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 581 729 B1

Printed by Jouve, 75001 PARIS (FR)

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel

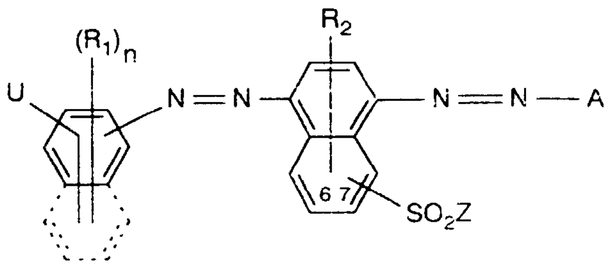

(1),

worin

$R_1$ und $R_2$ unabhängig voneinander Wasserstoff, $C_1$-$C_4$-Alkyl, $C_1$-$C_4$-Alkoxy, $C_2$-$C_4$-Alkanoylamino, Halogen oder Sulfo bedeuten,

Z eine Gruppe der Formel $-CH=CH_2$ oder $-CH_2-CH_2-Y$ und Y eine Abgangsgruppe ist, n die Zahl 1, 2 oder 3 und U ein Reaktivrest der Formel

$$-SO_2-Z' \quad (2),$$

$$-W-\underset{\displaystyle R}{\underset{|}{alk}}-SO_2-Z' \quad (2a),$$

$$-W-alk-E-alk'-SO_2-Z' \quad (2b),$$

$$-alk-W-\underset{\displaystyle R}{\underset{|}{alk'}}-SO_2-Z' \quad (2c)$$

oder

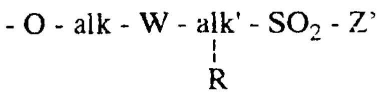 (2d)

ist, wobei

W eine Gruppe der Formel $-SO_2-NR_3-$, $-CONR_3-$ oder $-NR_3CO-$ ist,
$R_3$ Wasserstoff, unsubstituiertes oder durch Hydroxy, Sulfo, Sulfato, Carboxy oder Cyano substituiertes $C_1$-$C_4$-Alkyl oder ein Rest der Formel

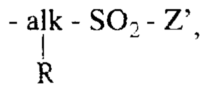

R Wasserstoff, Hydroxy, Sulfo, Sulfato, Carboxy, Cyano. Halogen,
$C_1$-$C_4$-Alkoxycarbonyl, $C_1$-$C_4$-Alkanoyloxy, Carbamoyl oder die Gruppe $-SO_2-Z'$ ist,
Z' die oben für Z angegebenen Bedeutungen hat,
E der Rest -O- oder $-NR_4-$ ist,
$R_4$ Wasserstoff oder $C_1$-$C_4$-Alkyl und

alk und alk' unabhängig voneinander $C_1$-$C_6$-Alkylen bedeuten, und A ein Rest der Formel

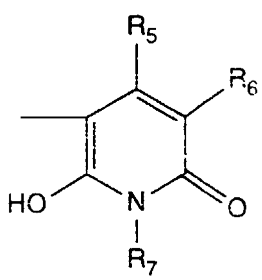 (7),

worin

$R_5$ und $R_7$ unabhängig voneinander Wasserstoff, $C_1$-$C_4$-Alkyl oder gegebenenfalls durch $C_1$-$C_4$-Alkyl, $C_1$-$C_4$-Alkoxy, $C_2$-$C_4$-Alkanoylamino, Halogen oder Sulfo substituiertes Phenyl bedeuten und
$R_6$ Wasserstoff, Cyano, Carbamoyl oder Sulfomethyl ist,

oder ein Rest der Formel

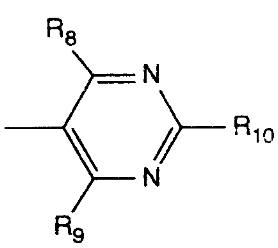 (8),

worin

$R_8$ und $R_9$ unabhängig voneinander Hydroxyl, Amino oder durch $C_1$-$C_{12}$-Alkyl substituiertes Amino, worin der $C_1$-

$C_{12}$-Alkylrest gegebenenfalls durch Hydroxyl, Sulfo oder Sulfato weitersubstituiert ist und mit Ausnahme von Methyl durch Sauerstoff unterbrochen sein kann, bedeuten und
$R_{10}$ Wasserstoff, $C_1$-$C_4$-Alkyl, Hydroxyl, gegebenenfalls durch Cyano substituiertes Amino oder gegebenenfalls durch $C_1$-$C_4$-Alkyl, $C_1$-$C_4$-Alkoxy, $C_2$-$C_4$-Alkanoylamino, Halogen oder Sulfo substituiertes Phenyl bedeutet,

oder ein Rest der Formel

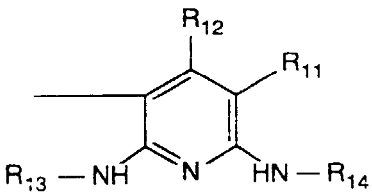

(9),

worin

$R_{11}$ Cyano, Carbamoyl oder Sulfomethyl,
$R_{12}$ $C_1$-$C_4$-Alkyl und
$R_{13}$ und $R_{14}$ unabhängig voneinander Wasserstoff, einen gegebenenfalls weitersubstituierten Halogenpyrimidin- oder Halogentriazin-Reaktivrest oder gegebenenfalls durch Hydroxyl, Sulfo oder Sulfato substituiertes $C_1$-$C_{12}$-Alkyl bedeuten, wobei der $C_1$-$C_{12}$-Alkylrest mit Ausnahme von Methyl durch Sauerstoff unterbrochen sein kann,

oder ein Rest der Formel

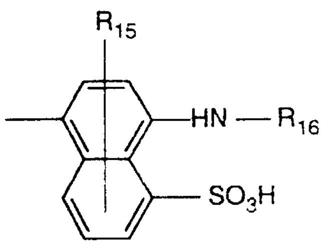

(10),

worin

$R_{15}$ Wasserstoff, $C_1$-$C_4$-Alkyl, $C_1$-$C_4$-Alkoxy, $C_2$-$C_4$-Alkanoylamino, Halogen oder Sulfo ist und
$R_{16}$ gegebenenfalls durch $C_1$-$C_4$-Alkyl, $C_1$-$C_4$-Alkoxy, $C_2$-$C_4$-Alkanoylamino, Halogen oder Sulfo substituiertes Phenyl oder einen gegebenenfalls weitersubstituierten Halogenpyrimidin- oder Halogentriazin-Reaktivrest bedeutet,

oder ein Rest der Formel

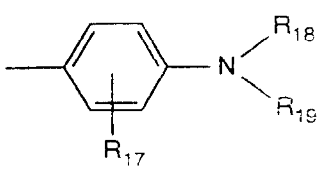

(11),

worin

$R_{17}$ Wasserstoff, $C_1$-$C_4$-Alkyl, $C_1$-$C_4$-Alkoxy, $C_2$-$C_6$-Alkanoylamino, $C_2$-$C_8$-Alkoxycarbonylamino, Halogen oder Sulfo ist und

$R_{18}$ und $R_{19}$ unabhängig voneinander Wasserstoff, ein gegebenenfalls weitersubstituierter Halogenpyrimidin- oder Halogentriazin-Reaktivrest oder gegebenenfalls durch Hydroxy, Sulfo, Sulfato, Phenyl oder $C_5$-$C_7$-Cycloalkyl substituiertes $C_1$-$C_8$-Alkyl sind, wobei der Phenylrest durch $C_1$-$C_4$-Alkyl, $C_1$-$C_4$-Alkoxy, $C_2$-$C_4$-Alkanoylamino, Halogen oder Sulfo und der $C_5$-$C_7$-Cycloalkylrest durch $C_1$-$C_4$-Alkyl weitersubstituiert sein kann,

oder ein Rest der Formel

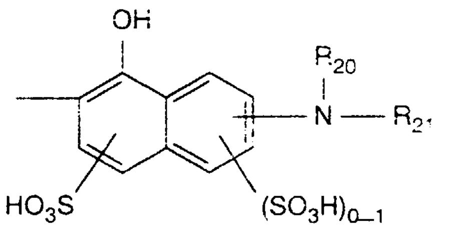

(12),

worin

$R_{20}$ Wasserstoff oder $C_1$-$C_4$-Alkyl und

$R_{21}$ $C_2$-$C_6$-Alkanoyl, gegebenenfalls durch $C_1$-$C_4$-Alkyl, $C_1$-$C_4$-Alkoxy, $C_2$-$C_4$-Alkanoylamino, Halogen oder Sulfo substituiertes Benzoyl oder einen gegebenenfalls weitersubstituierten Halogenpyrimidin- oder Halogentriazin-Reaktivrest bedeutet, ist.

Als $C_1$-$C_4$-Alkyl kommen für $R_1$ und $R_2$ unabhängig voneinander Methyl, Aethyl, Propyl, Isopropyl, Butyl, Isobutyl, sek.-Butyl oder tert.-Butyl, insbesondere Methyl, in Betracht.

Als $C_1$-$C_4$-Alkoxy kommen für $R_1$ und $R_2$ unabhängig voneinander Methoxy, Aethoxy, Propoxy, Isopropoxy, Butoxy, Isobutoxy, sek.-Butoxy oder tert.-Butoxy, insbesondere Methoxy, in Betracht.

Als $C_2$-$C_4$-Alkanoyiamino kommen für $R_1$ und $R_2$ unabhängig voneinander z.B. Acetylamino oder Propionylamino, insbesondere Acetylamino, in Betracht.

Als Halogen kommen für $R_1$ und $R_2$ unabhängig voneinander z.B. Fluor, Brom oder insbesondere Chlor in Betracht.

Geeignete Abgangsgruppen Y sind z.B. -Cl, -Br, -F, $-OSO_3H$, $-SSO_3H$, $-OCO-CH_3$, $-OPO_3H_2$, $-OCO-CCl_3$, $-OCO-CHCl_2$, $-OCO-CH_3Cl$, $-OSO_2-C_1-C_4$-Alkyl, $-OSO_2-N(C_1-C_4\text{-Alkyl})_2$ oder $-OCO-C_6H_5$.

Bevorzugt ist Y eine Gruppe der Formel -Cl, $-OSO_3H$, $-SSO_3H$, $-OCO-CH_3$, $-OCO-C_6H_5$ oder $-OPO_3H_2$, insbesondere -Cl oder $-OSO_3H$, vorzugsweise $-OSO_3H$.

Bei alk und alk' handelt es sich unabhängig voneinander z.B. um einen Methylen-, Äthylen-, 1,3-Propylen-, 1,4-Butylen- 1,5-Pentylen- oder 1,6-Hexylenrest oder deren verzweigte Isomere.

Bevorzugt stehen alk und alk' für einen $C_1$-$C_4$-Alkylenrest und insbesondere bevorzugt für einen Äthylenrest.

R bedeutet bevorzugt Wasserstoff oder die Gruppe $-SO_2-Z'$, worin Z' die zuvor angegebenen Bedeutungen hat. Besonders bevorzugt steht R für Wasserstoff.

$R_3$ ist vorzugsweise Wasserstoff, $C_1$-$C_4$-Alkyl, wie Methyl, Aethyl, Propyl, Isopropyl, Butyl, Isobutyl, sek.-Butyl oder tert.-Butyl, oder eine Gruppe $-alk-SO_2-Z'$, worin alk und Z' jeweils die zuvor angegebenen Bedeutungen haben. Besonders bevorzugt ist $R_3$ Wasserstoff.

E steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

Der Rest $-SO_2Z$ ist vorzugsweise in 6- oder 7-Stellung an die Naphthylen-Mittelkomponente gebunden.

Bevorzugt als Reste der Formel (7) sind solche, worin $R_5$ und $R_7$ unabhängig voneinander $C_1$-$C_4$-Alkyl sind, Für $R_6$ ist die Bedeutung als Cyano, Carbamoyl oder Sulfomethyl bevorzugt.

Bevorzugte Reste der Formel (8) sind solche, worin $R_8$ und $R_9$ unabhängig voneinander Hydroxyl, Amino oder durch $C_1$-$C_5$-Alkyl, insbesondere $C_1$-$C_4$-Alkyl, substituiertes Amino, worin der Alkylrest gegebenenfalls durch Hydroxyl, Sulfo oder Sulfato weitersubstituiert ist und mit Ausnahme von Methyl durch Sauerstoff unterbrochen sein kann, bedeuten. Für $R_{10}$ ist die Bedeutung als Hydroxyl, Phenyl oder gegebenenfalls durch Cyano substituiertes Amino bevorzugt.

Bevorzugte Reste der Formel (9) sind solche, worin $R_{13}$ und $R_{14}$ unabhängig voneinander Wasserstoff oder gegebenenfalls durch Hydroxyl, Sulfo oder Sulfato substituiertes $C_1$-$C_{12}$-Alkyl, insbesondere $C_1$-$C_8$-Alkyl und vorzugsweise $C_1$-$C_4$-Alkyl, bedeuten, wobei der Alkylrest mit Ausnahme von Methyl durch Sauerstoff unterbrochen sein kann.

Als Reste der Formel (10) kommen bevorzugt solche in Betracht, worin $R_{16}$ gegebenenfalls durch $C_1$-$C_4$-Alkyl, $C_1$-$C_4$-Alkoxy, $C_2$-$C_4$-Alkanoylamino, Halogen oder Sulfo substituiertes Phenyl, insbesondere unsubstituiertes Phenyl, bedeutet. $R_{15}$ ist vorzugsweise Wasserstoff.

Bevorzugte Reste der Formel (11) sind solche, worin $R_{18}$ und $R_{19}$ unabhängig voneinander gegebenenfalls durch Hydroxy, Sulfo, Sulfato oder Phenyl substituiertes $C_1$-$C_8$-Alkyl sind, wobei der Phenylrest durch $C_1$-$C_4$-Alkyl, $C_1$-$C_4$-Alkoxy, $C_2$-$C_4$-Alkanoylamino, Halogen oder Sulfo, insbesondere durch Sulfo, weitersubstituiert sein kann. Der Rest $R_{17}$ ist vorzugsweise Wasserstoff, $C_2$-$C_6$-Alkanoylamino, Halogen oder Sulfo, insbesondere Wasserstoff oder $C_2$-$C_6$-Alkanoylamino.

Vorzugsweise enthält von den Resten der Formeln (7) bis (12) nur der Rest der Formel (12) einen gegebenenfalls weitersubstituierten Halogenpyrimidin- oder Halogentriazinrest.

Als gegebenenfalls weitersubstituierter Halogenpyrimidin- oder Halogentriazin-Reaktivrest in den Resten der Formeln (9) bis (12), insbesondere im Rest der Formel (12), kommen bevorzugt die Reaktivreste der Formeln

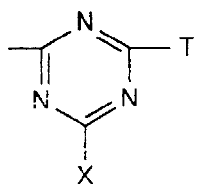

und

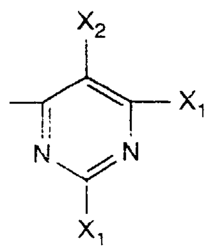

in Betracht, worin

X eine als Anion abspaltbare Gruppe und
T eine als Anion abspaltbare Gruppe, ein nicht-reaktiver Rest oder ein reaktiver Rest der Formel

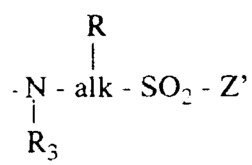
(5a),

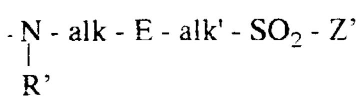
(5b),

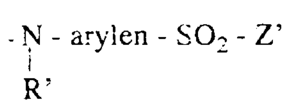
(5c),

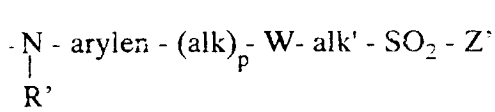
(5d)

oder

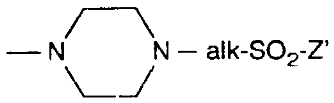 (5e)

ist, wobei

R, $R_3$, E, W, Z', alk und alk' die oben angegebenen Bedeutungen und Bevorzugungen haben,
R' Wasserstoff oder unsubstituiertes oder durch Carboxy, Cyano, Hydroxy, Sulfo oder Sulfato substituiertes $C_1$-$C_4$-Alkyl,
arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest bedeutet und p 0 oder 1 ist,
einer der Reste $X_1$ eine als Anion abspaltbare Gruppe ist und der andere Rest $X_1$ ein nicht-reaktiver Substituent oder ein Rest der Formeln (5a) bis (5e) oder eine als Anion abspaltbare Gruppe ist und
$X_2$ ein negativer Substituent ist.

R' ist vorzugsweise Wasserstoff oder ein $C_1$-$C_4$-Alkylrest und insbesondere bevorzugt Wasserstoff, Methyl oder Aethyl.

Arylen ist vorzugsweise ein 1,3- oder 1,4-Phenylenrest, der unsubstituiert oder z.B. durch Sulfo, Methyl, Methoxy oder Carboxy substituiert ist.

X steht z.B. für Fluor, Chlor, Brom, Sulfo, $C_1$-$C_4$-Alkylsulfonyl oder Phenylsulfonyl und bevorzugt für Fluor oder Chlor.

Bedeutet T eine als Anion abspaltbare Gruppe, so handelt es sich hierbei z.B. um Fluor, Chlor, Brom, Sulfo, $C_1$-$C_4$-Alkylsulfonyloder oder Phenylsulfonyl und bevorzugt um Fluor oder Chlor.

Steht T für einen nicht-reaktiven Substituenten, so kann dies z.B. ein Hydroxy-, $C_1$-$C_4$-Alkoxy-, $C_1$-$C_4$-Alkylthio-, Amino-, Amino-, N-$C_1$-$C_4$-Alkylamino- oder N,N-Di-$C_1$-$C_4$-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-$C_1$-$C_4$-Alkyl-N-phenylamino- oder Phenylamino- oder Naphthylaminorest, wobei das Phenyl oder Naphthyl gegebenenfalls z.B. durch $C_1$-$C_4$-Alkyl, $C_1$-$C_4$-Alkoxy, Carboxy, Sulfo oder Halogen substituiert ist, sein.

Beispiele für geeignete nicht-reaktive Substituenten T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat T vorzugsweise die Bedeutung Amino, N-$C_1$-$C_4$-Alkylamino, das im Alkylteil unsubstituiert oder durch Hydroxy, Sulfato oder Sulfo substituiert ist, Morpholino, Phenylamino oder N-$C_1$-$C_4$-Alkyl-N-phenylamino, worin das Phenyl jeweils unsubstituiert oder durch Sulfo, Carboxy, Methyl oder Methoxy substituiert ist.

Besonders bevorzugte nicht-reaktive Substituenten T sind Morpholino, N-$C_1$-$C_4$-Alkyl-N-phenylamino oder Phenylamino, worin das Phenyl jeweils unsubstituiert oder durch Sulfo, Carboxy, Methyl oder Methoxy, insbesondere Sulfo, substituiert ist.

Bei dem als Anion abspaltbaren Rest $X_1$ handelt es sich vorzugsweise um Fluor oder Chlor.

Handelt es sich bei $X_1$ um einen nicht-reaktiven Substituenten, so kommen z.B. die oben für T in der Bedeutung als nicht-reaktiver Substituent genannten Bedeutungen und Bevorzugungen in Betracht.

Beispiele für geeignete Reste $X_2$ sind Nitro, Cyan, $C_1$-$C_4$-Alkylsulfonyl, Carboxy, Chlor, Hydroxy, $C_1$-$C_4$-Alkoxysulfonyl, $C_1$-$C_4$-Alkylsulfinyl, $C_1$-$C_4$-Alkoxycarbonyl oder $C_2$-$C_4$-Alkanoyl, wobei die Bedeutungen Chlor, Cyano und Methylsulfonyl für $X_2$ bevorzugt sind. Besonders bevorzugt ist $X_2$ Chlor.

Als Reaktivreste sind solche bevorzugt, worin T eine als Anion abspaltbare Gruppe, insbesondere Fluor oder Chlor, oder ein nicht-reaktiver Rest ist, wobei für T als nichtreaktiver Substituent die oben angegebenen Bedeutungen und Bevorzugungen gelten.

Ganz besonders bevorzugt als Reaktivreste sind solche, worin X Fluor oder Chlor bedeutet und T Fluor, Chlor oder ein nicht-reaktiver Rest ist, wobei für T als nichtreaktiver Substituent die oben angegebenen Bedeutungen und Bevorzugungen gelten.

Als Reaktivreste sind solche bevorzugt, worin beide Substituenten $X_1$ eine als Anion abspaltbare Gruppe, insbesondere Chlor oder Fluor, bedeuten. Hierbei ist $X_2$ vorzugsweise Chlor.

Ganz besonders bevorzugt als Reaktivreste sind solche, worin beide Substituenten $X_1$ Fluor bedeuten und $X_2$ Chlor ist.

Für $R_{20}$ im Rest der Formel (12) ist die Bedeutung als Wasserstoff bevorzugt.

Besonders bevorzugt sind Reaktivfarbstoffe, worin U ein Rest der Formel (2), (2a), (2b) oder (2d) ist, und worin insbesondere W eine Gruppe der Formel -CONH- oder -NHCO-, R Wasserstoff, E der Rest -O- oder -NH- und Y eine Gruppe der Formel -Cl, $-OSO_3H$, $-SSO_3H$, $-OCO-CH_3$, $-OCO-C_6H_5$ oder $-OPO_3H_2$ ist.

Ganz besonders bevorzugt sind Reaktivfarbstoffe, worin A ein Rest der Formeln (7) bis (12), U ein Rest der Formel (2), (2a), (2b) oder (2d), W eine Gruppe der Formel -CONH- oder -NHCO-, R Wasserstoff, E der Rest -O- oder -NH- und Y eine Gruppe der Formel -Cl, $-OSO_3H$, $-SSO_3H$, $-OCO-CH_3$, $-OCO-C_6H_5$ oder $-OPO_3H_2$, insbesondere eine Gruppe der Formel -Cl oder $-OSO_3H$, ist.

Die Reaktivfarbstoffe der Formel (1) enthalten bevorzugt mindestens eine Sulfo- oder Sulfatogruppe, insbesondere mindestens eine Sulfogruppe. Besonders bevorzugt enthalten sie 1 bis 5, insbesondere 2 bis 5 Sulfo- und/oder Suifatogruppen; vorzugsweise 2 bis 5 Sulfogruppen. Hierbei handelt es sich besonders bevorzugt um permanente Sulfo- und Sulfatogruppen, d.h. solche, welche nicht bei der Reaktion des Reaktivrests mit dem Fasermaterial abgespalten werden.

Gegenstand der Erfindung ist ferner ein Verfahren zur Herstellung der Reaktivfarbstoffe der Formel (1), welches dadurch gekennzeichnet ist, dass man ein Amin der Formel

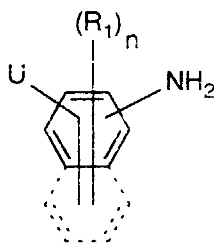

(13)

diazotiert, auf eine Verbindung der Formel

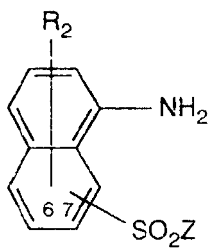

(14)

kuppelt, das erhaltene Zwischenprodukt diazotiert und auf eine Verbindung der Formel

H-A (15)

kuppelt, oder direkt das Zwischenprodukt diazotiert und auf eine Verbindung der Formel (15) kuppelt, wobei A, $R_1$, $R_2$, Z, n und U die unter Formel (1) angegebenen Bedeutungen haben.

Die Diazotierung des Amins der Formel (13) und des nach Kupplung mit der Verbindung der Formel (14) erhältlichen Zwischenproduktes erfolgt in der Regel durch Einwirken salpetriger Säure in wässrig-mineralsaurer Lösung bei tiefer Temperatur, wie z.B. 0 bis 10°C, die Kupplung auf die Kupplungskomponente der Formel (14) und (15) bei sauren, neutralen bis schwach alkalischen pH-Werten, insbesondere bei einem pH-Wert von 2 bis 8.

Eine abgewandelte Ausführungsform des Verfahrens besteht darin, dass man zunächst einen Farbstoff herstellt, der eine Vorstufe des Reaktivrestes enthält, und diese nachträglich in die Endstufe umwandelt, z.B. durch Veresterung oder eine Additionsreaktion. Beispielsweise kann man einen Farbstoff, worin Z ein Rest $HO-CH_2CH_2-$ ist, herstellen und dieses Produkt mit Schwefelsäure umsetzen, so dass die Hydroxygruppe in die Sulfatogruppe überführt wird. Die Sulfatierung der Hydroxygruppe erfolgt z.B. durch Umsetzung mit konzentrierter Schwefelsäure bei ca. 0°C bis mässig erhöhter Temperatur.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit einer Base, wie z.B. Natriumhydroxid, behandeln, wobei die Sulfatoäthylsulfonylreste in Vinylsulfonylreste übergehen.

Grundsätzlich lassen sich die Reaktivfarbstoffe der Formel (1) herstellen, indem man von Vorprodukten oder Zwischenprodukten für Farbstoffe, die faserreaktive Reste enthalten, ausgeht, oder diese faserreaktiven Reste in hierfür geeignete Zwischenprodukte mit Farbstoffcharakter einführt.

In dem erfindungsgemässen Verfahren zur Herstellung der Reaktivfarbstoffe der Formel (1) gelten für die Substituenten der Verbindungen der Formeln (13), (14) und (15) die zuvor angegebenen Bedeutungen und Bevorzugungen.

Die Verbindungen der Formeln (13), (14) und (15) sind bekannt oder können in Analogie zu bekannten Verfahren hergestellt werden.

Die Reaktivfarbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdaikali- oder Ammoniumsalze oder die Salze eines organischen Amins in Betracht. Als Beispiele seien die Natrium-, Lithium-, Kalium- oder Ammoniumsalze oder das Salz des Mono-. Di- oder Triäthanolamins genannt.

Die Reaktivfarbstoffe der Formel (1) eignen sich zum Färben und Bedrucken der verschiedensten Materialien, wie hydroxyigruppenhaltigen oder stickstoffhaltigen Fasermaterialien. Als Beispiele seien Seide. Leder, Wolle, Polyamidfasern und polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die Reaktivfarbstoffe der Formel (1) zum Färben oder Bedrucken von cellulosehaltigen Fasermaterialien oder insbesondere natürlichen oder synthetischen Polyamidfasermaterialien.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbeterriperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 72 Teile Anilin-2-β-sulfatoäthylsulfon-5-sulfonsäure in 500 Teilen einer Eiswassersuspension werden mit 45 Teilen konzentrierter Salzsäure angesäuert und mit 40 Teilen einer 5-normalen Natriumnitritlösung diazotiert. Man rührt eine Stunde bei einer Temperatur von ca. 5°C nach und zerstört dann überschüssige salpetrige Säure mittels Amidosulfonsäure. Die so hergestellte Diazoniumsalzlösung lässt man bei einem pH-Wert von 2,5 bis 3 langsam in eine Lösung von 66 Teilen 1-Naphthylamino-6-β-sulfatoäthylsulfon in 600 Teilen Wasser einlaufen. Man rührt 2 Stunden bis zur vollständigen Kupplung nach. Der pH wird durch Zugabe von Natriumbicarbonat bei einem Wert von 2,5 bis 3 gehalten. Die so hergestellte Lösung enthält die in Form der freien Säure der Formel

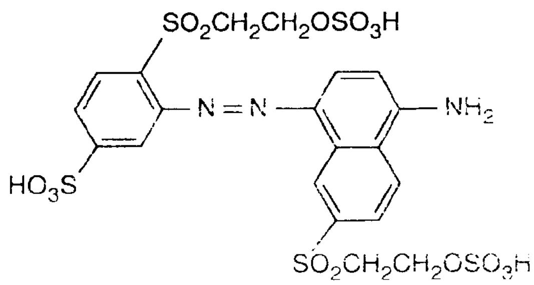

(101).

entsprechende Verbindung.

Die so erhaltene Lösung wird in üblicher Weise diazotiert, durch Ansäuern mit konzentrierter Salzsäure und Zugabe einer wässrigen Natriumnitritlösung, und anschliessend zu einer Mischung von 85 Teilen 1-Benzoylamino-8-naphthol-3,6-disulfonsäure in 800 Teilen Wasser gegeben. Man rührt 2 Stunden bis zur vollständigen Kupplung nach. Der pH wird durch Zugabe von Natriumbicarbonat bei einem Wert von 6 bis 7 gehalten. Dann wird der erhaltene Farbstoff umkehrosmotisiert und gefriergetrocknet. Man erhält einen Farbstoff, der in Form der freien Säure der Verbindung der Formel

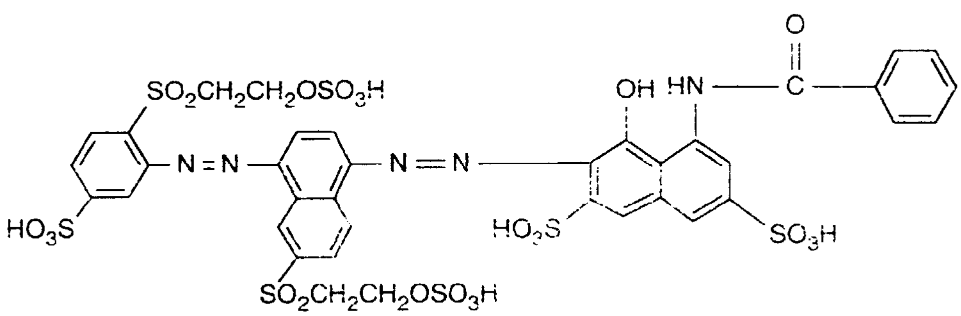

(102)

entspricht. Der Farbstoff der Formel (102) färbt Baumwolle und Wolle in dunkelblauen Farbtönen.

Beispiel 2:

a) 56 Teile Anilin-4-β-sulfatoäthylsulfon in 500 Teilen einer Eiswassersuspension werden mit 45 Teilen konzentrierter Salzsäure angesäuert und mit 40 Teilen einer 5-normalen Natriumnitritlösung diazotiert. Man rührt eine Stunde bei einer Temperatur von ca. 5°C nach und zerstört dann überschüssige salpetrige Säure mittels Amidosulfonsäure. Die so hergestellte Diazoniumsalzlösung lässt man bei einem pH-Wert von 2,5 bis 3 langsam in eine Lösung von 66 Teilen 1-Naphthylamino-6-β-sulfatoäthylsulfon in 600 Teilen Wasser einlaufen. Man rührt 2 Stunden bis zur vollständigen Kupplung nach. Der pH wird durch Zugabe von Natriumbicarbonat bei einem Wert von 2,5 bis 3 gehalten. Die so hergestellte Lösung enthält die in Form der freien Säure der Formel

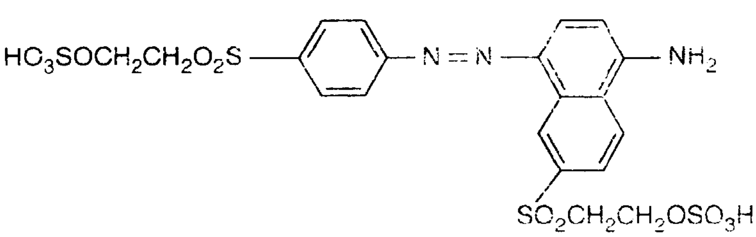

(103)

entsprechende Verbindung.

b) Es wird eine separate Lösung einer Kuppiungskomponente hergestellt. Hiefzu werden 64 Teile 1-Amino-8-naphthol-3,6-disulfonsäure in 800 Teilen Wasser unter Zusatz von 15 Teilen Natriumcarbonat bei einem pH-Wert von 4,5 bis 5 gelöst. Man kühlt dann auf eine Temperatur von 0°C ab und lässt 28 Teile Cyanurfluorid zutropfen, wobei

der pH durch Einstreuen von Natriumbicarbonat bei einem Wert von 3 bis 4 gehalten wird. Es wird 15 Minuten bei einem pH-Wert von 3 bis 4 und einer Temperatur von 0°C nachgerührt und dann eine Lösung des Natriumsalzes von 38 Teilen Anilin-3-sulfonsäure zugegeben. Es wird bei einem pH-Wert von 5 und einer Temperatur von 20 bis 25°C 5 Stunden gerührt, bis kein freies Amin mehr durch Diazotierprobe nachweisbar ist. Die so hergestellte Lösung enthält die in Form der freien Säure der Formel

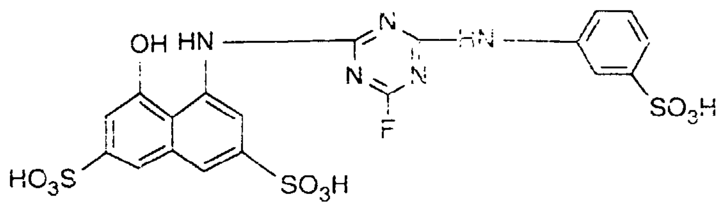

(104)

entsprechende Verbindung.

c) Die gemäss Schritt a) erhaltene Lösung wird in üblicher Weise diazotiert, durch Ansäuern mit konzentrierter Salzsäure und Zugabe einer wässrigen Natriumnitritlösung, und anschliessend bei einem pH-Wert von 6 bis 7 langsam in die gemäss Schritt b) hergestellte Lösung der Kupplungskomponente der Formel (104) zulaufen gelassen. Man rührt 2 Stunden bis zur vollständigen Kupplung nach. Der pH wird durch Zugabe von Natriumcarbonat bei einem Wert von 6,5 bis 7 gehalten. Dann wird der Farbstoff mit Natriumchlorid ausgeschieden, auf der Nutsche isoliert und bei einer Temperatur von 40 bis 50°C getrocknet. Man erhält einen Farbstoff, der in Form der freien Säure der Verbindung der Formel

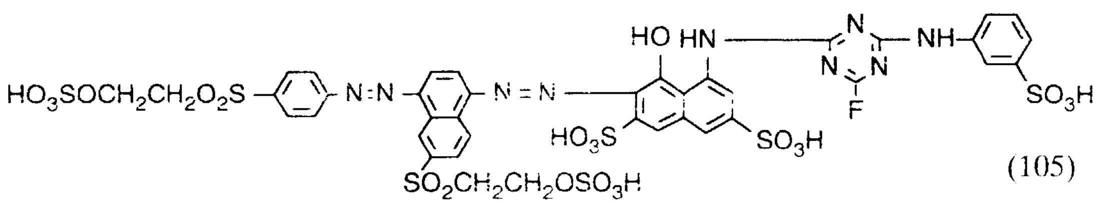

(105)

entspricht. Der Farbstoff der Formel (105) färbt Baumwolle und wolle in dunkelblauen Farbtönen.

<u>Beispiele 3 bis 60:</u> Analog den Beispielen 1 und 2 können die in der folgenden Tabelle in Spalte 2 angegebenen Reaktivfarbstoffe erhalten werden, die Wolle und Baumwolle in den in Spalte 3 angegebenen Farbtönen färben.

Tabelle

| Bsp. | Reaktivfarbstoff | Farbton |
|---|---|---|
| 3 | 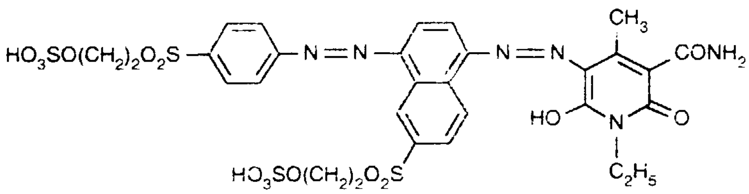 | Orange |
| 4 | 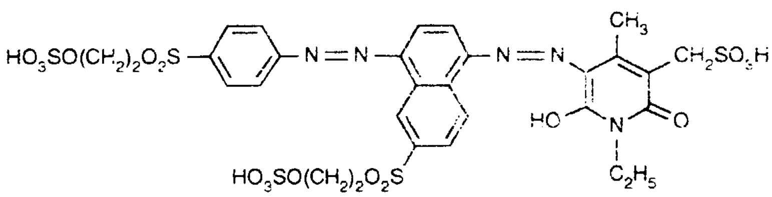 | Orange |
| 5 | 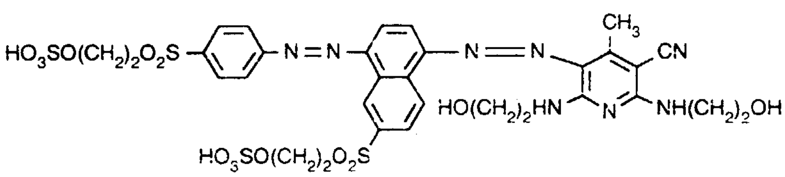 | Bordeaux |
| 6 | 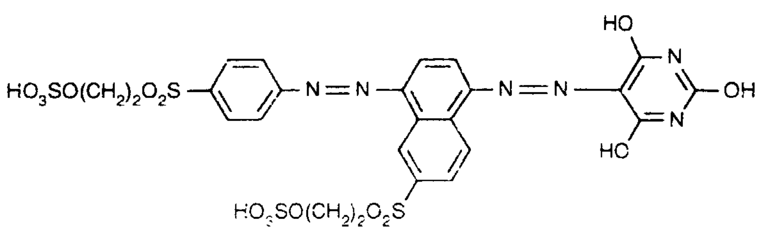 | Orange |

7 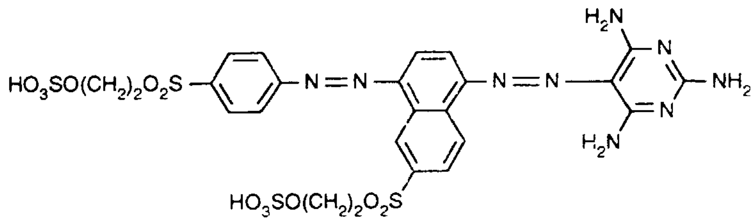 Rot

8 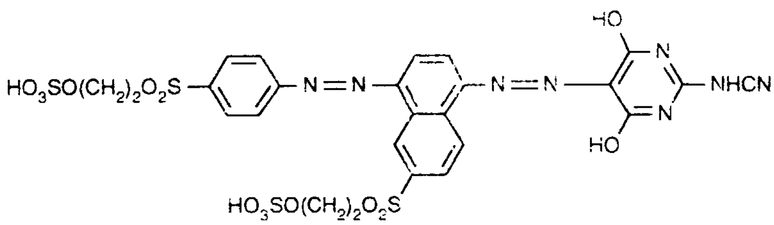 Orange

9 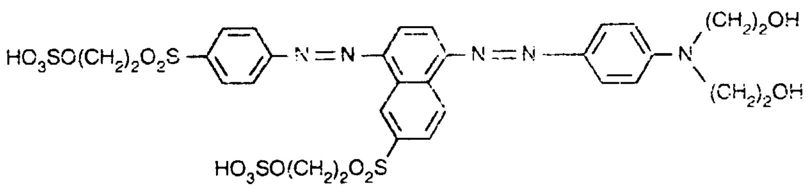 Rot

10 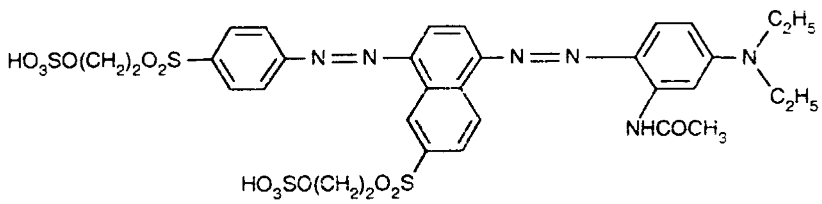 Bordeaux

11 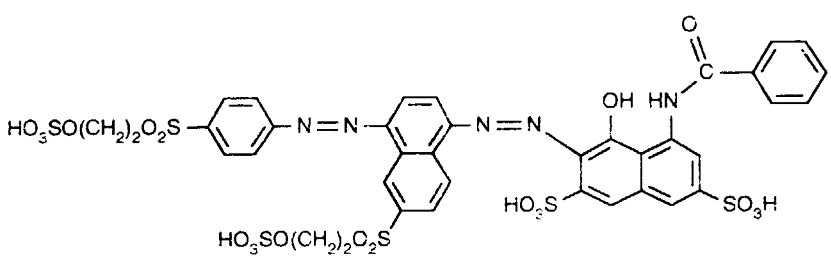 Marineblau

12 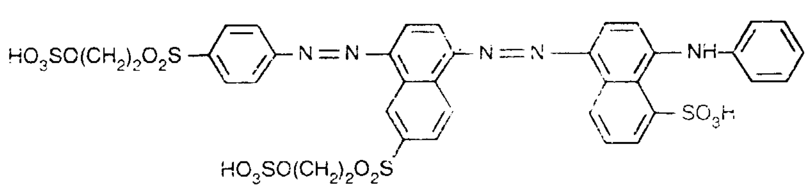 Dunkelblau

13 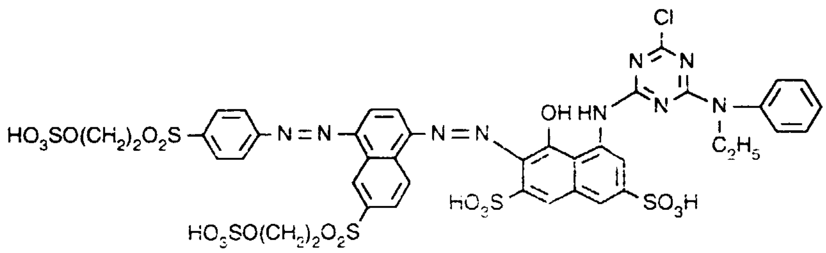 Marineblau

14 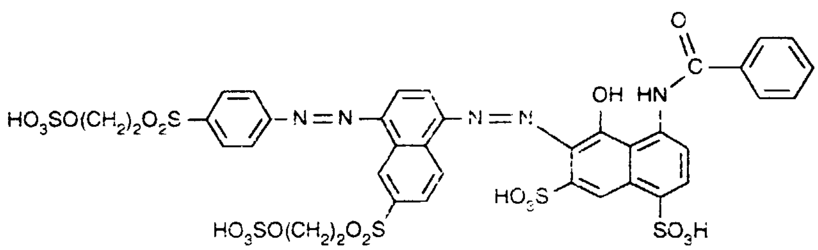 Dunkelblau

15 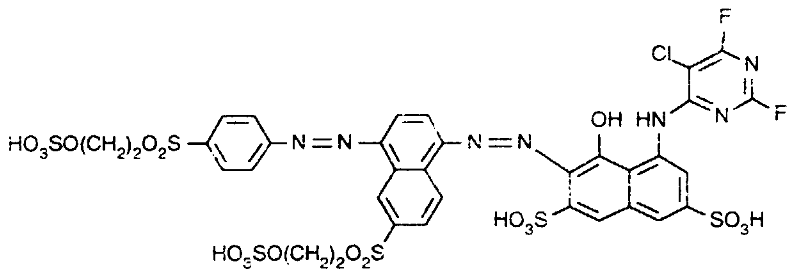 Marineblau

16 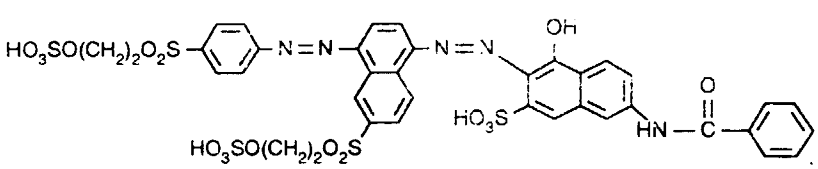 Violett

17 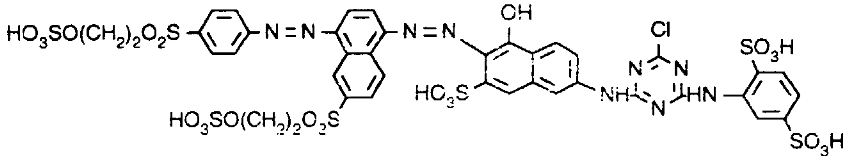 Violett

18 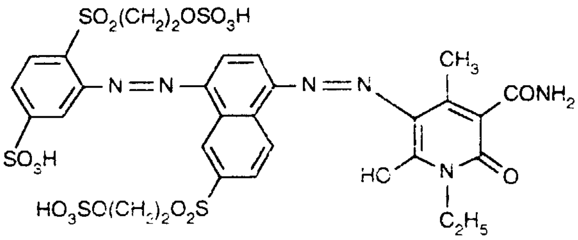 Orange

19 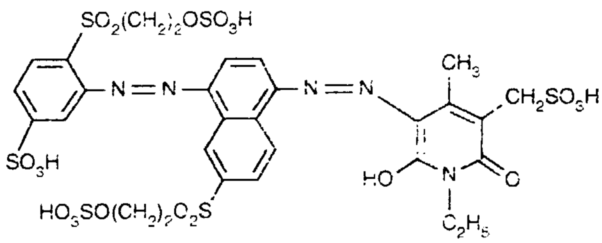 Orange

20 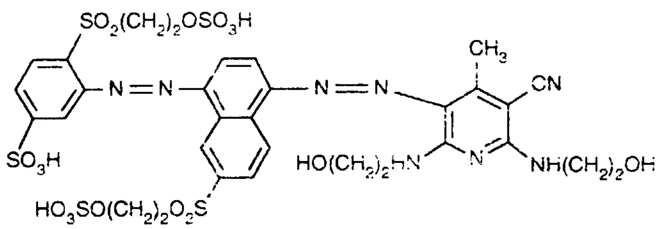 Bordeaux

21 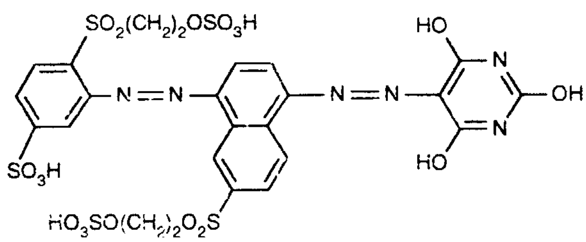 Goldorange

22 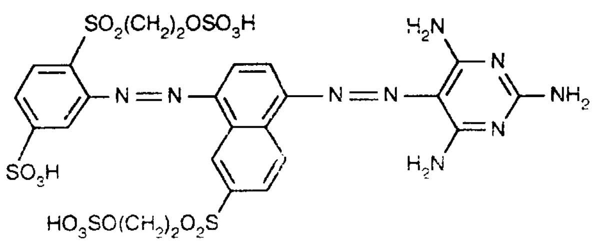 Rot

23 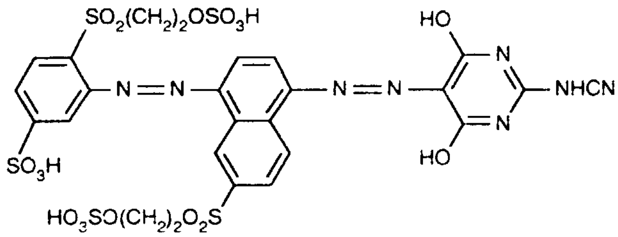 Orange

24 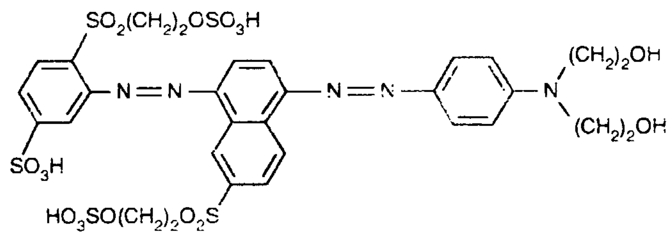 Rot

25 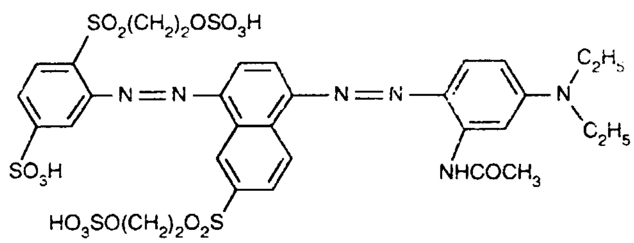 Bordeaux

26 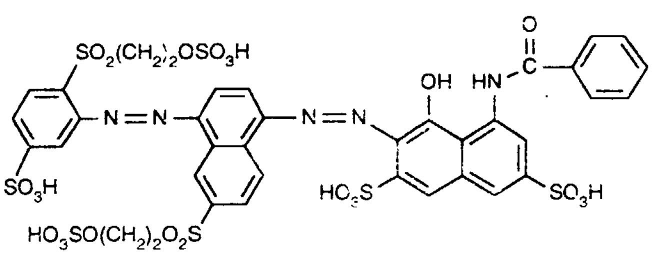 Marineblau

27 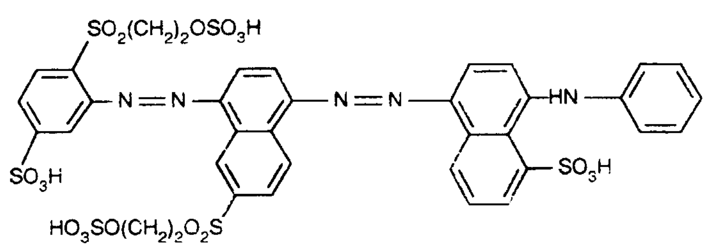 Dunkelblau

| | | |
|---|---|---|
| 28 | 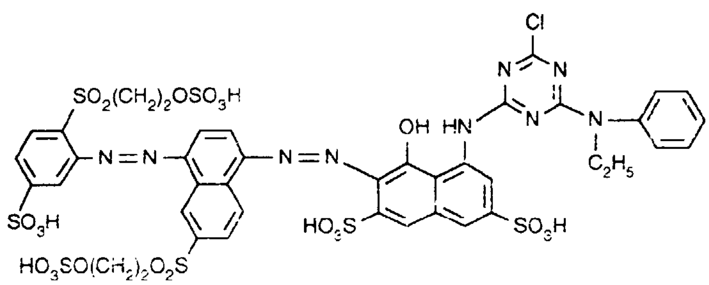 | Marineblau |
| 29 | 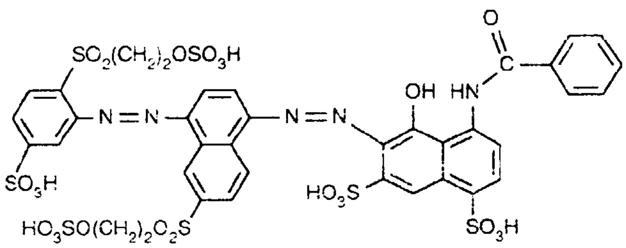 | Dunkelblau |
| 30 | 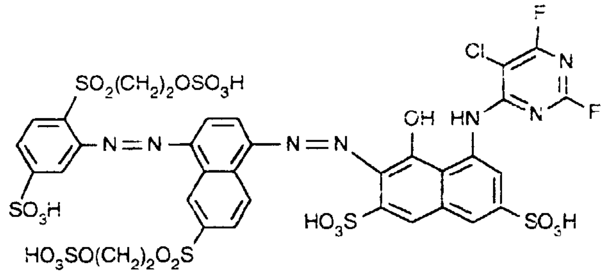 | Marineblau |
| 31 | 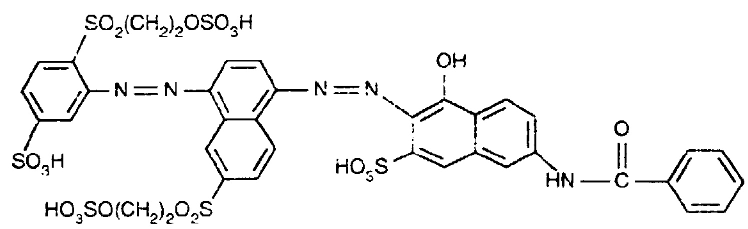 | Violett |
| 32 | 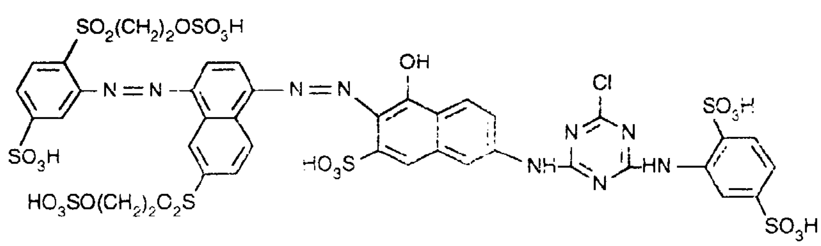 | Violett |

33 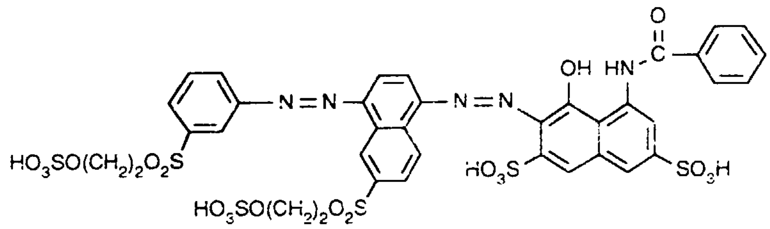 Marineblau

34 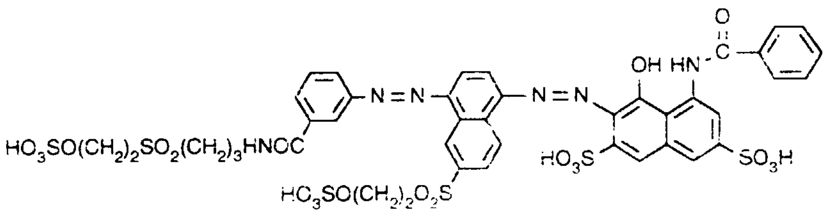 Marineblau

35 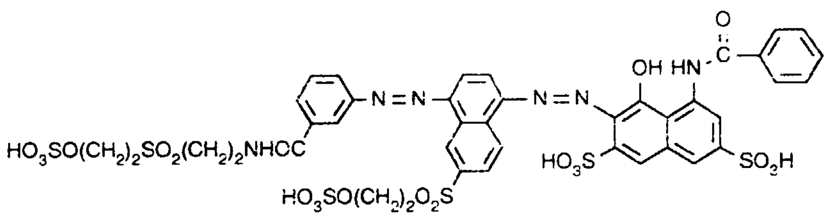 Marineblau

36 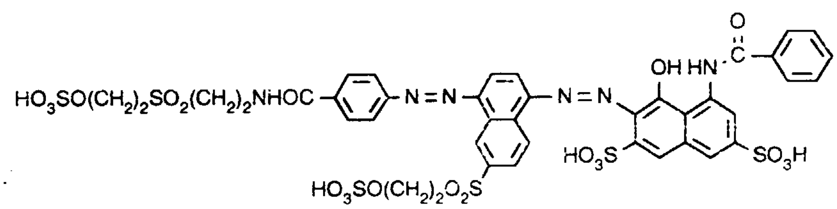 Marineblau

37 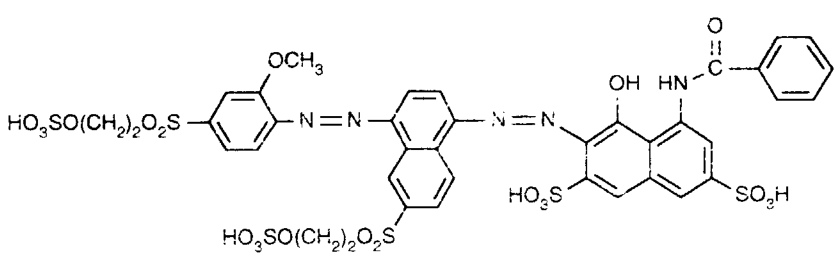 Marineblau

38 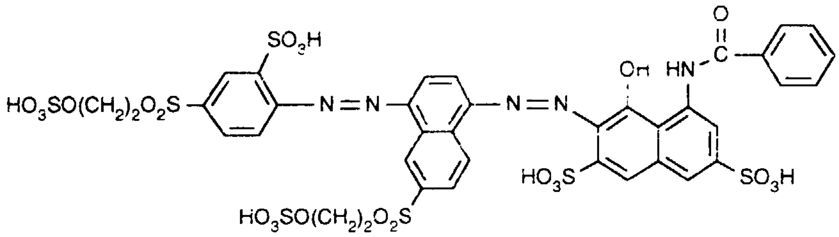 Marineblau

39 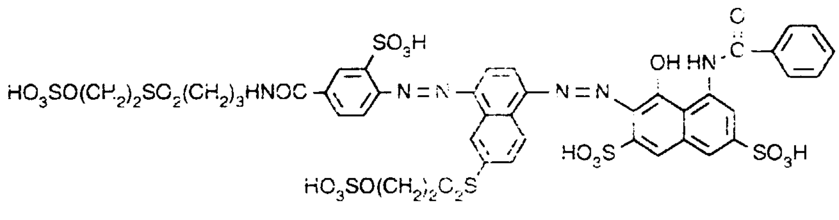 Marineblau

40 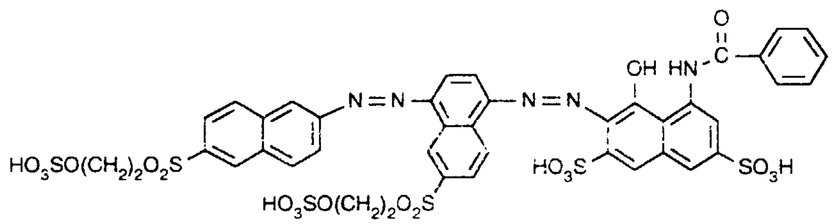 Marineblau

41 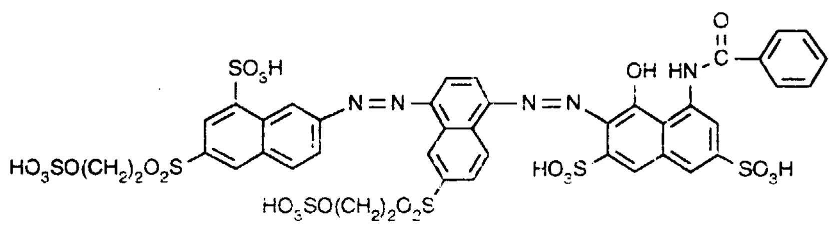 Marineblau

42 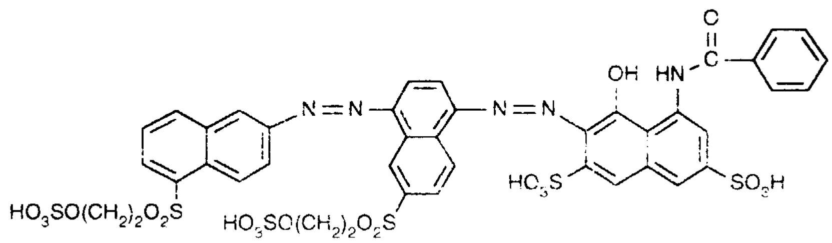 Marineblau

43 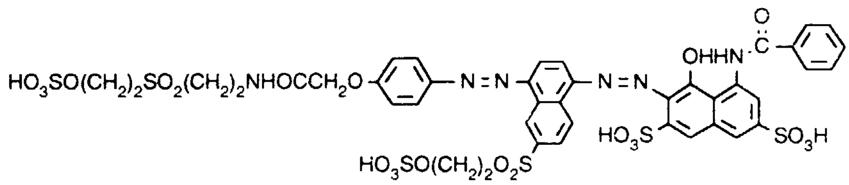 Marineblau

44 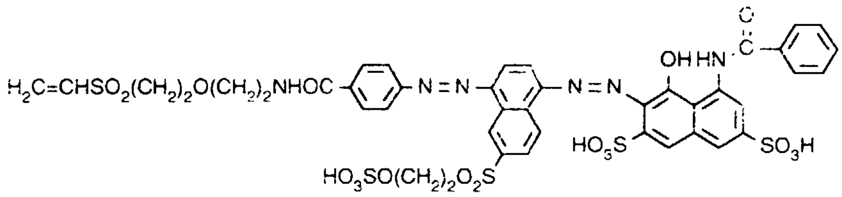 Marineblau

45 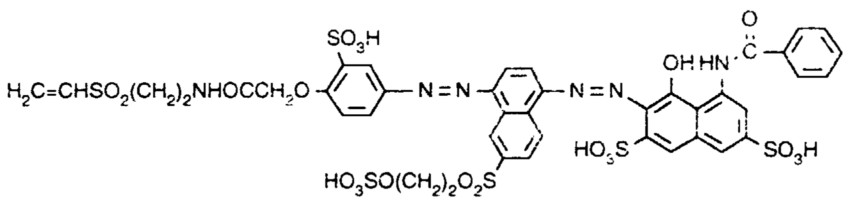 Marineblau

46 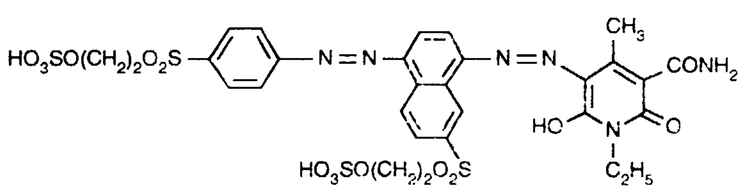 Orange

47 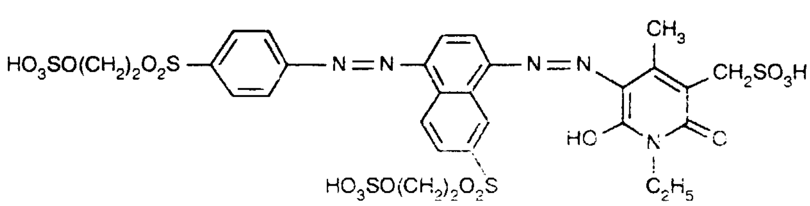 Orange

48 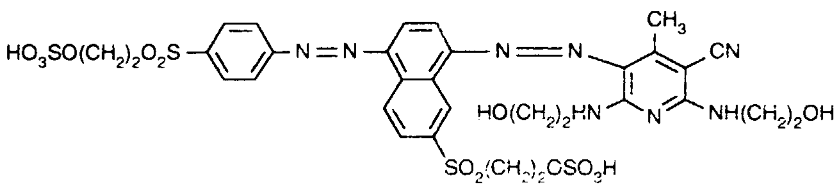 Bordeaux

49 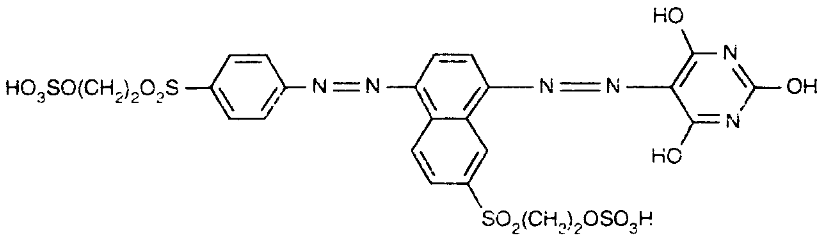 Orange

50 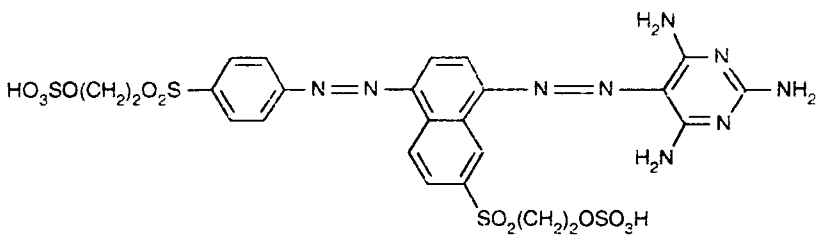 Rot

51 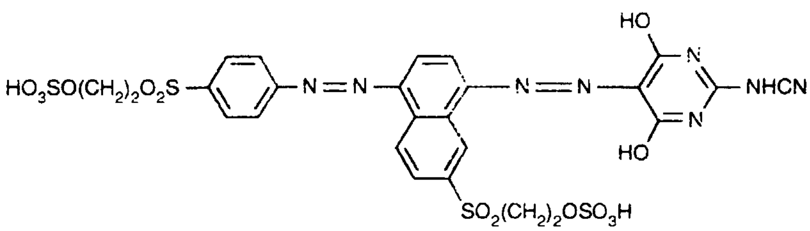 Orange

52 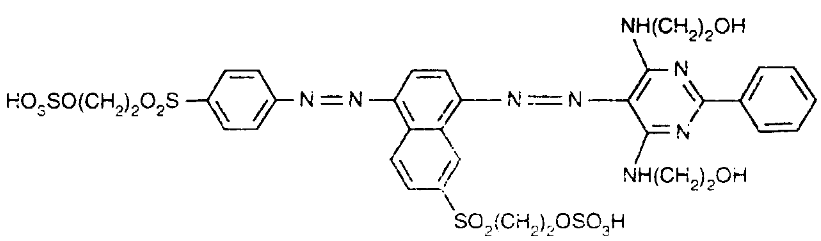 Rot

53 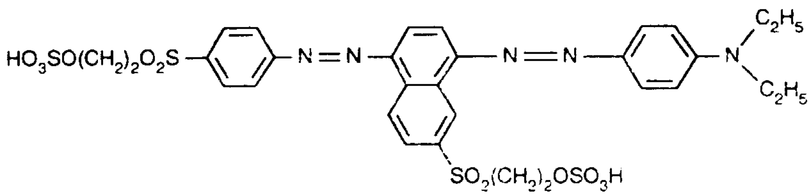 Rot

54 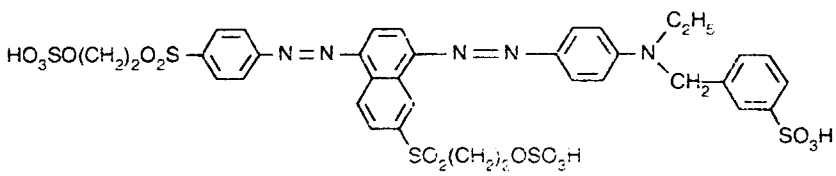 Rot

55 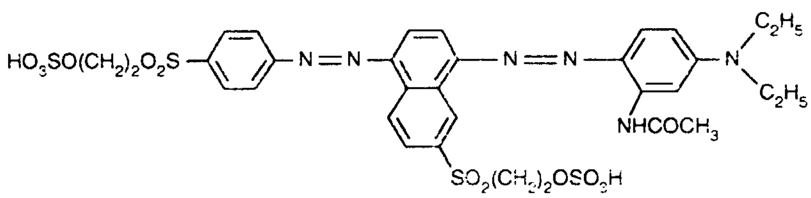 Marineblau

56 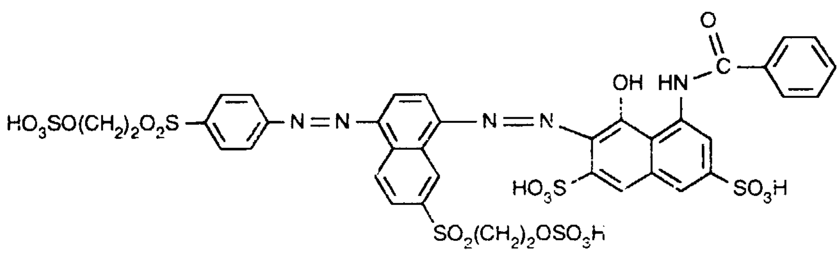 Marineblau

57 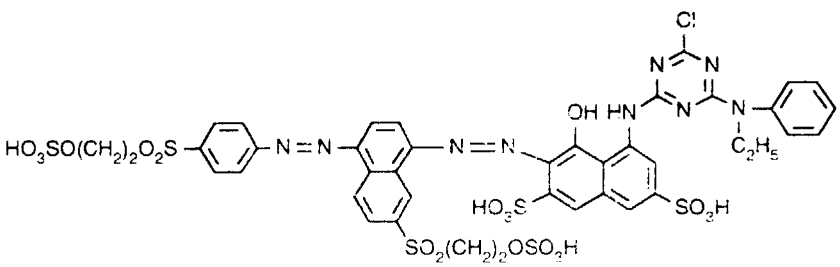 Marineblau

58 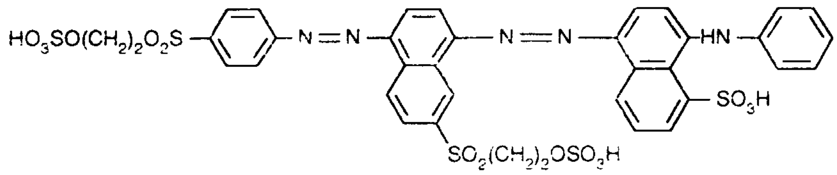 Marineblau

59 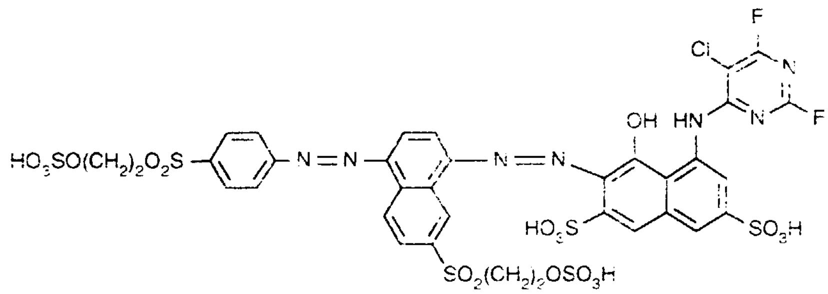 Marineblau

60 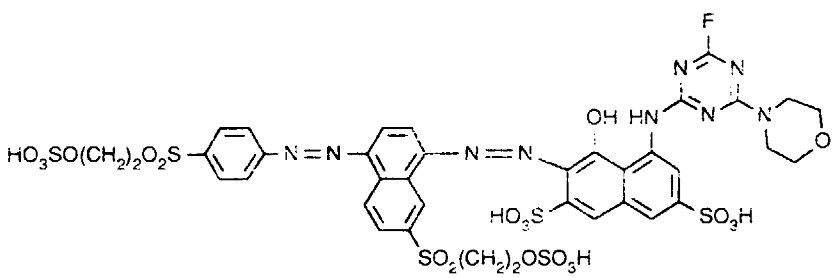 Marineblau

Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

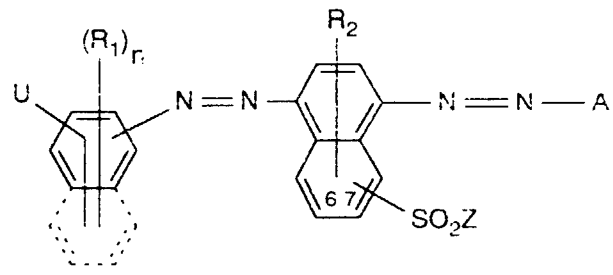

(1),

worin

$R_1$ und $R_2$ unabhängig voneinander Wasserstoff, $C_1$-$C_4$-Alkyl, $C_1$-$C_4$-Alkoxy, $C_2$-$C_4$-Alkanoylamino, Halogen oder Sulfo bedeuten.
Z eine Gruppe der Formel $-CH=CH_2$ oder $-CH_2-CH_2-Y$ und Y eine Abgangsgruppe ist, n die Zahl 1, 2 oder 3,
U ein Reaktivrest der Formel

$$-SO_2-Z' \quad (2),$$

$$-W-\underset{\displaystyle R}{\underset{|}{alk}}-SO_2-Z' \quad (2a),$$

$$-W-alk-E-alk'-SO_2-Z' \quad (2b),$$

$$-alk-W-\underset{\displaystyle R}{\underset{|}{alk'}}-SO_2-Z' \quad (2c)$$

oder

$$-O-alk-W-\underset{\displaystyle R}{\underset{|}{alk'}}-SO_2-Z' \quad (2d)$$

ist, wobei

W eine Gruppe der Formel $-SO_2-NR_3-$, $-CONR_3-$ oder $-NR_3CO-$ ist,
$R_3$ Wasserstoff, unsubstituiertes oder durch Hydroxy, Sulfo, Sulfato, Carboxy oder Cyano substituiertes $C_1$-$C_4$-Alkyl oder ein Rest der Formel

$$-\underset{\displaystyle R}{\underset{|}{alk}}-SO_2-Z',$$

R Wasserstoff, Hydroxy, Sulfo, Sulfato, Carboxy, Cyano, Halogen,
$C_1$-$C_4$-Alkoxycarbonyl, $C_1$-$C_4$-Alkanoyloxy, Carbamoyl oder die Gruppe $-SO_2-Z'$ ist, Z' die oben für Z angegebenen Bedeutungen hat,
E der Rest -O- oder -$NR_4$- ist,
$R_4$ Wasserstoff oder $C_1$-$C_4$-Alkyl und alk und alk' unabhängig voneinander $C_1$-$C_6$-Alkylen bedeuten, und
A ein Rest der Formel

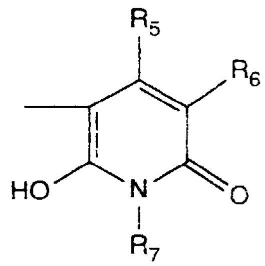

(7),

worin

$R_5$ und $R_7$ unabhängig voneinander Wasserstoff, $C_1$-$C_4$-Alkyl oder gegebenenfalls durch $C_1$-$C_4$-Alkyl, $C_1$-$C_4$-Alkoxy, $C_2$-$C_4$-Alkanoylamino, Halogen oder Sulfo substituiertes Phenyl bedeuten und
$R_6$ Wasserstoff, Cyano, Carbamoyl oder Suifomethyl ist,

oder ein Rest der Formel

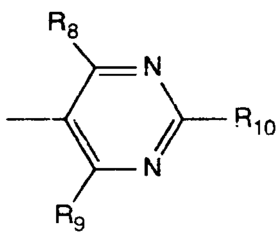

(8),

worin

$R_8$ und $R_9$ unabhängig voneinander Hydroxyl, Amino oder durch $C_1$-$C_{12}$-Alkyl substituiertes Amino, worin der $C_1$-$C_{12}$-Alkylrest gegebenenfalls durch Hydroxyl, Sulfo oder Sulfato weitersubstituiert ist und mit Ausnahme von Methyl durch Sauerstoff unterbrochen sein kann, bedeuten und
$R_{10}$ Wasserstoff, $C_1$-$C_4$-Alkyl, Hydroxyl, gegebenenfalls durch Cyano substituiertes Amino oder gegebenenfalls durch $C_1$-$C_4$-Alkyl, $C_1$-$C_4$-Alkoxy, $C_2$-$C_4$-Alkanoylamino, Halogen oder Sulfo substituiertes Phenyl bedeutet,

oder ein Rest der Formel

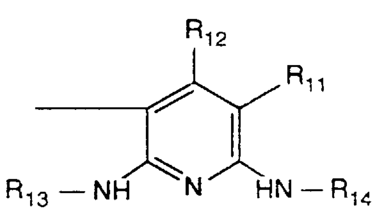

(9),

worin

$R_{11}$ Cyano, Carbamoyl oder Sulfomethyl,
$R_{12}$ $C_1$-$C_4$-Alkyl und
$R_{13}$ und $R_{14}$ unabhängig voneinander Wasserstoff, einen gegebenenfalls weitersubstituierten Halogenpyrimidin- oder Halogentriazin-Reaktivrest oder gegebenenfalls durch Hydroxyl, Sulfo oder Sulfato substituiertes $C_1$-$C_{12}$-Alkyl bedeuten, wobei der $C_1$-$C_{12}$-Alkylrest mit Ausnahme von Methyl durch Sauerstoff unterbrochen sein kann,

oder ein Rest der Formel

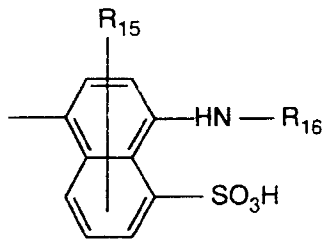

(10),

worin

$R_{15}$ Wasserstoff, $C_1$-$C_4$-Alkyl, $C_1$-$C_4$-Alkoxy, $C_2$-$C_4$-Alkanoylamino, Halogen oder Sulfo ist und
$R_{16}$ gegebenenfalls durch $C_1$-$C_4$-Alkyl, $C_1$-$C_4$-Alkoxy, $C_2$-$C_4$-Alkanoylamino, Halogen oder Sulfo substituiertes Phenyl oder einen gegebenenfalls weitersubstituierten Halogenpyrimidin- oder Halogentriazin-Reaktivrest bedeutet,

oder ein Rest der Formel

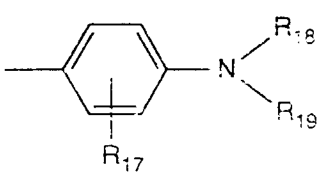

(11),

worin

$R_{17}$ Wasserstoff, $C_1$-$C_4$-Alkyl, $C_1$-$C_4$-Alkoxy, $C_2$-$C_6$-Alkanoylamino, $C_2$-$C_8$-Alkoxycarbonylamino, Halogen oder Sulfo ist und
$R_{18}$ und $R_{19}$ unabhängig voneinander Wasserstoff, ein gegebenenfalls weitersubstituierter Halogenpyrimidin- oder Halogentriazin-Reaktivrest oder gegebenenfalls durch Hydroxy, Sulfo, Sulfato, Phenyl oder $C_5$-$C_7$-Cycloalkyl substituiertes $C_1$-$C_8$-Alkyl sind, wobei der Phenylrest durch $C_1$-$C_4$-Alkyl, $C_1$-$C_4$-Alkoxy, $C_2$-$C_4$-Alkanoylamino, Halogen oder Sulfo und der $C_5$-$C_7$-Cycloalkylrest durch $C_1$-$C_4$-Alkyl weitersubstituiert sein kann, oder ein Rest der Formel

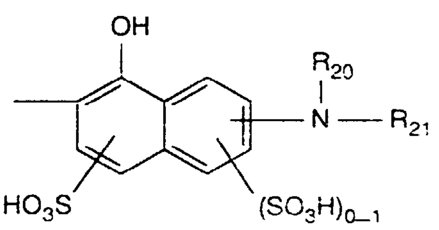

(12),

worin

$R_{20}$ Wasserstoff oder $C_1$-$C_4$-Alkyl und
$R_{21}$ $C_2$-$C_6$-Alkanoyl, gegebenenfalls durch $C_1$-$C_4$-Alkyl, $C_1$-$C_4$-Alkoxy, $C_2$-$C_4$-Alkanoylamino, Halogen oder Sulfo substituiertes Benzoyl oder einen gegebenenfalls weitersubstituierten Halogenpyrimidin- oder Halogentriazin-Reaktivrest bedeutet, ist.

**2.** Reaktivfarbstoffe gemäss Anspruch 1, worin der Rest $-SO_2Z$ in 6- oder 7-Stellung an die Naphthylen-Mittelkomponente gebunden ist.

**3.** Reaktivfarbstoffe gemäss einem der Ansprüche 1 und 2, worin U ein Rest der Formel (2), (2a), (2b) oder (2d) ist.

**4.** Reaktivfarbstoffe gemäss einem der Ansprüche 1 bis 3, worin R Wasserstoff, W eine Gruppe der Formel -CONH- oder -NHCO- und E der Rest -O- oder -NH- ist.

**5.** Reaktivfarbstoffe gemäss einem der Ansprüche 1 bis 4, worin Y eine Gruppe der Formel -Cl, $-OSO_3H$, $-SSO_3H$, $-OCO-CH_3$, $-OCO-C_6H_5$ oder $-OPO_3H_2$, insbesondere eine Gruppe der Formel -Cl oder $-OSO_3H$, ist.

**6.** Reaktivfarbstoffe gemäss einem der Ansprüche 1 bis 5, worin U ein Rest der Formel (2), (2a), (2b) oder (2d), W eine Gruppe der Formel -CONH- oder -NHCO-, R Wasserstoff, E der Rest -O- oder -NH- und Y eine Gruppe der Formel -Cl oder $-OSO_3H$ ist.

**7.** Reaktivfarbstoffe gemäss einem der Ansprüche 1 bis 6, dadurch gekennzeichnet, dass die Reaktivfarbstoffe mindestens eine Sulfo- oder Sufatogruppe, insbesondere mindestens eine Sulfogruppe, enthalten.

**8.** Verfahren zur Herstellung von Reaktivfarbstoffen gemäss Anspruch 1, dadurch gekennzeichnet, dass man ein Amin der Formel

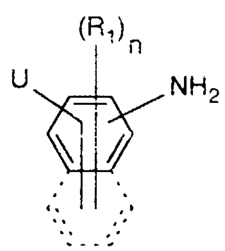

(13)

diazotiert, auf eine Verbindung der Formel

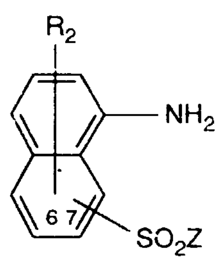

(14)

kuppelt, das erhaltene Zwischenprodukt diazotiert und auf eine Verbindung der Formel

H-A (15)

kuppelt, oder direkt das Zwischenprodukt diazotiert und auf eine Verbindung der Formel (15) kuppelt, wobei A, $R_1$, $R_2$, Z, n und U die in Anspruch 1 angegebenen Bedeutungen haben.

**9.** Verwendung der Reaktivfarbstoffe gemäss einem der Ansprüche 1 bis 7 bzw. der gemäss Anspruch 8 erhaltenen Reaktivfarbstoffe zum Färben oder Bedrucken von hydroxylgruppenhaltigen oder stickstoffhaltigen Fasermaterialien.

**10.** Verwendung gemäss Anspruch 9 zum Färben oder Bedrucken von cellulosehaltigen Fasermaterialien oder natürlichen oder synthetischen Polyamidfasermaterialien.

## Claims

**1.** A reactive dye of the formula

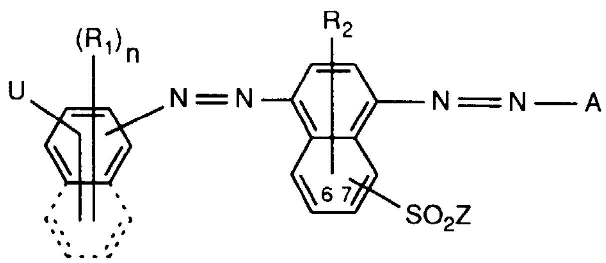

(1),

in which $R_1$ and $R_2$ independently of one another are hydrogen, $C_1$-$C_4$alkyl, $C_1$-$C_4$alkoxy, $C_2$-$C_4$alkanoylamino, halogen or sulfo,

Z is a group of the formula $-CH=CH_2$ or $-CH_2-CH_2-Y$ and Y is a leaving group, n is the number 1, 2 or 3,
U is a reactive radical of the formula

$$-SO_2-Z' \quad (2),$$

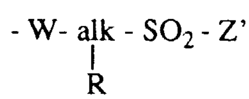

(2a),

$$-W-alk-E-alk'-SO_2-Z' \quad (2b),$$

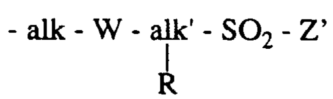

(2c)

or

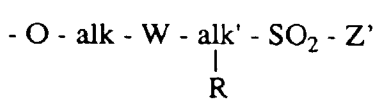

(2d),

in which

W is a group of the formula $-SO_2-NR_3-$, $-CONR_3-$ or $-NR_3CO-$,
$R_3$ is hydrogen, $C_1$-$C_4$alkyl which is unsubstituted or substituted by hydroxyl, sulfo, sulfato, carboxyl or

cyano, or a radical of the formula

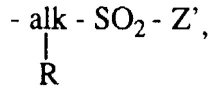

R is hydrogen, hydroxyl, sulfo, sulfato, carboxyl, cyano, halogen, $C_1$-$C_4$alkoxycarbonyl, $C_1$-$C_4$alkanoyloxy, carbamoyl or the group $-SO_2Z'$,
Z' is as defined above for Z,
E is the radical -O- or $-NR_4-$,
$R_4$ is hydrogen or $C_1$-$C_4$alkyl and
alk and alk' independently of one another are $C_1$-$C_6$alkylene, and

A is a radical of the formula

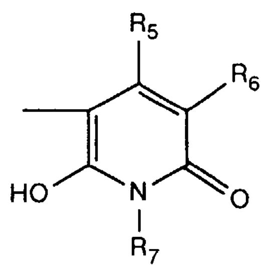

(7),

in which

$R_5$ and $R_7$ independently of one another are hydrogen, $C_1$-$C_4$alkyl or phenyl which is unsubstituted or substituted by $C_1$-$C_4$alkyl, $C_1$-$C_4$alkoxy, $C_2$-$C_4$alkanoylamino, halogen or sulfo, and
$R_6$ is hydrogen, cyano, carbamoyl or sulfomethyl,

or a radical of the formula

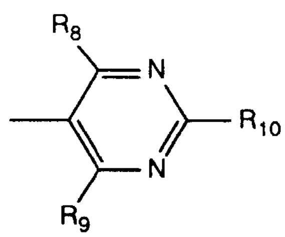

(8),

in which

$R_2$ and $R_9$ independently of one another are hydroxyl, amino or amino which is substituted by $C_1$-$C_{12}$alkyl, in which the $C_1$-$C_{12}$alkyl radical is unsubstituted or further substituted by hydroxyl, sulfo or sulfato and, with the exception of methyl, can be interrupted by oxygen, and
$R_{10}$ is hydrogen, $C_1$-$C_4$alkyl, hydroxyl, amino which is unsubstituted or substituted by cyano or phenyl which is unsubstituted or substituted by $C_1$-$C_4$alkyl, $C_1$-$C_4$alkoxy, $C_2$-$C_4$alkanoylamino, halogen or sulfo,

or a radical of the formula

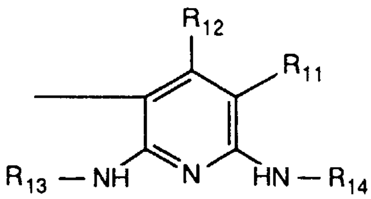

(9),

in which

$R_{11}$ is cyano, carbamoyl or sulfomethyl,
$R_{12}$ is $C_1$-$C_4$alkyl and
$R_{13}$ and $R_{14}$ independently of one another are hydrogen, a halopyrimidine or halotriazine reactive radical which is further substituted or unsubstituted or $C_1$-$C_{12}$alkyl which is unsubstituted or substituted by hydroxyl, sulfo or sulfato, in which the $C_1$-$C_{12}$alkyl radical, with the exception of methyl, can be interrupted by oxygen,

or a radical of the formula

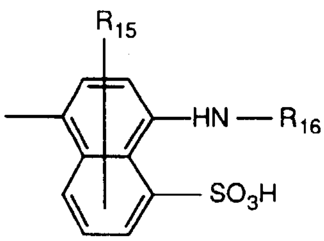

(10),

in which

$R_{15}$ is hydrogen, $C_1$-$C_4$alkyl, $C_1$-$C_4$alkoxy, $C_2$-$C_4$alkanoylamino, halogen or sulfo and
$R_{16}$ is phenyl which is unsubstituted or substituted by $C_1$-$C_4$alkyl, $C_1$-$C_4$alkoxy, $C_2$-$C_4$alkanoylarnino, halogen or sulfo or a halopyrimidine or halotriazine reactive radical which is further substituted or unsubstituted,

or a radical of the formula

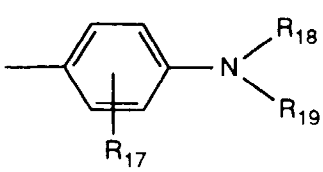

(11),

in which

$R_{17}$ is hydrogen, $C_1$-$C_4$alkyl, $C_1$-$C_4$alkoxy, $C_2$-$C_6$alkanoylamino, $C_2$-$C_8$alkoxycarbonylamino, halogen or sulfo and
$R_{18}$ and $R_{19}$ independently of one another are hydrogen, a halopyrimidine or halotriazine reactive radical which is further substituted or unsubstituted or $C_1$-$C_8$alkyl which is unsubstituted or substituted by hydroxyl, sulfo, sulfato, phenyl or $C_5$-$C_7$cycloalkyl, in which the phenyl radical can be further substituted by $C_1$-$C_4$alkyl, $C_1$-$C_4$alkoxy, $C_2$-$C_4$alkanoylamino, halogen or sulfo and the $C_5$-$C_7$cycloalkyl radical can be further substituted by $C_1$-$C_4$alkyl,

or a radical of the formula

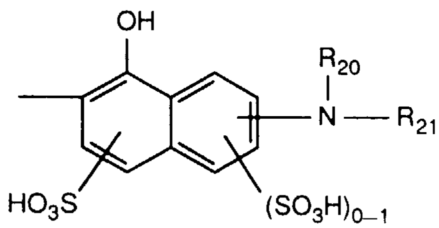

(12),

in which

$R_{20}$ is hydrogen or $C_1$-$C_4$alkyl and
$R_{21}$ is $C_2$-$C_6$alkanoyl, benzoyl which is unsubstituted or substituted by $C_1$-$C_4$alkyl, $C_1$-$C_4$alkoxy, $C_2$-$C_4$alkanoylamino, halogen or sulfo or a halopyrimidine or halotriazine reactive radical which is further substituted or unsubstituted.

**2.** A reactive dye according to claim 1, in which the radical $-SO_2Z$ is bonded to the naphthylene central component in the 6- or 7-position.

**3.** A reactive dye according to either of claims 1 and 2, in which U is a radical of the formula (2), (2a), (2b) or (2d).

**4.** A reactive dye according to any one of claims 1 to 3, in which R is hydrogen, W is a group of the formula -CONH- or -NHCO- and E is the radical -O- or -NH-.

**5.** A reactive dye according to any one of claims 1 to 4, in which Y is a group of the formula -Cl, $-OSO_3H$, $-SSO_3H$, $-OCO-CH_3$, $-OCO-C_6H_5$ or $-OPO_3H_2$, in particular a group of the formula -Cl or $-OSO_3H$.

**6.** A reactive dye according to any one of claims 1 to 5, in which U is a radical of the formula (2), (2a), (2b) or (2d), W is a group of the formula -CONH- or -NHCO-, R is hydrogen, E is the radical -O- or -NH- and Y is a group of the formula -Cl or $-OSO_3H$.

**7.** A reactive dye according to any one of claims 1 to 6, which contains at least one sulfo or sulfato group, in particular at least one sulfo group.

**8.** A process for the preparation of a reactive dye according to claim 1, which comprises diazotizing an amine of the formula

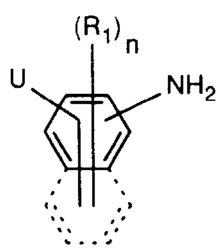

(13),

coupling the diazotization product to a compound of the formula

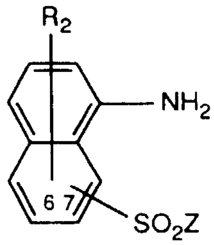

(14),

diazotizing the resulting intermediate and coupling the diazotization product to a compound of the formula

$$\text{H-A} \qquad (15),$$

or diazotizing the intermediate directly and coupling the diazotization product to a compound of the formula (15), A, $R_1$, $R_2$, Z, n and U being as defined in claim 1.

**9.** The use of a reactive dye according to any one of claims 1 to 7 or of a reactive dye obtained according to claim 8 for dyeing or printing fibre materials containing hydroxyl groups or nitrogen.

**10.** The use according to claim 9 for dyeing or printing cellulosic fibre materials or naturally occurring or synthetic polyamide fibre materials.

**Revendications**

**1.** Colorants réactifs de formule

(1)

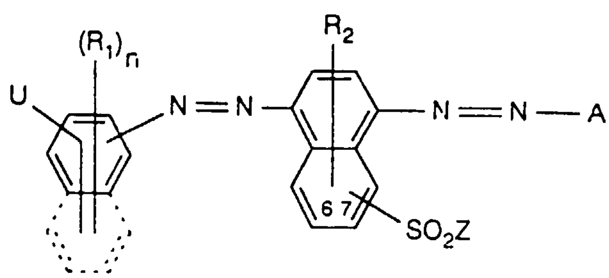

dans laquelle

$R_1$ et $R_2$ représentent, indépendamment l'un de l'autre, un atome d'hydrogène, un groupe alkyle en $C_{1-4}$, alcoxy en $C_{1-4}$, alcanoylamino en $C_{2-4}$, halogéno ou sulfo,
Z représente un groupe de formule $-CH=CH_2$ ou $-CH_2-CH_2-Y$ et Y représente un groupe partant,
n vaut 1, 2 ou 3 et
U représente un résidu réactif de formule

$$-SO_2-Z' \qquad (2),$$

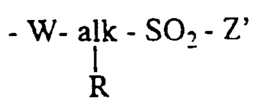

(2a),

$$-W\text{-alk-}E\text{-alk}'\text{-}SO_2\text{-}Z' \qquad (2b),$$

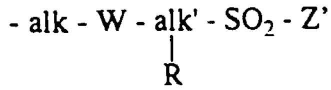

(2c)

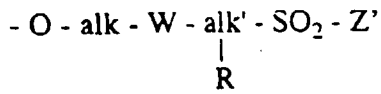

(2d)

où

W représente un groupe de formule $-SO_2-NR_3-$, $-CONR_3-$ ou $-NR_3CO-$, $R_3$ représente un atome d'hydrogène, un groupe alkyle en $C_{1-4}$ non substitué ou portant un substituant hydroxyle, sulfo, sulfato, carboxy ou cyano, ou un résidu de formule

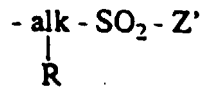

R représente un atome d'hydrogène, un groupe hydroxyle, sulfo, sulfato, carboxy, cyano, halogéno, (alcoxy en $C_{1-4}$)-carbonyle, alcanoyloxy en $C_{1-4}$, carbamoyle ou le groupe $-SO_2-Z'$,
Z' a la signification indiquée ci-dessus pour Z,
E représente un résidu -O- ou $-NR_4-$,
$R_4$ représente un atome d'hydrogène ou un groupe alkyle en $C_{1-4}$,

et *alk* et *alk'* représentent, indépendamment l'un de l'autre, un groupe alkylène en $C_{1-6}$, et A un résidu de formule

(7) 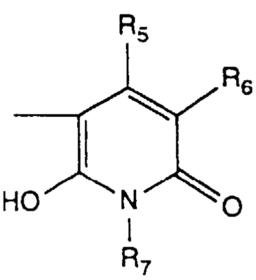

dans laquelle

$R_5$ et $R_7$ représentent, indépendamment l'un de l'autre, un atome d'hydrogène, un groupe alkyle en $C_{1-4}$ ou un groupe phényle portant éventuellement un ou plusieurs substituants alkyle en $C_{1-4}$, alcoxy en $C_{1-4}$, alcanoylamino en $C_{2-4}$, halogéno ou sulfo, et
$R_6$ représente un atome d'hydrogène ou un groupe cyano, carbamoyle ou sulfométhyle,
ou un résidu de formule

(8) 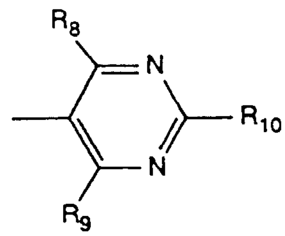

dans laquelle

$R_8$ et $R_9$ représentent, indépendamment l'un de l'autre, un groupe hydroxyle, amino ou arnino portant des substituants alkyle en $C_{1-12}$, ce résidu alkyle en $C_{1-12}$ pouvant porter à son tour des substituants hydroxyle, sulfo ou sulfato et pouvant être interrompu, à l'exception du groupe méthyle, par un atome d'oxygène, et
$R_{10}$ représente un atome d'hydrogène, un groupe alkyle en $C_{1-4}$, hydroxyle, amino portant éventuellement un groupe cyano, ou un groupe phényle portant éventuellement un ou plusieurs substituants alkyle en $C_{1-4}$, alcoxy en $C_{1-4}$, alcanoylamino en $C_{2-4}$, halogéno ou sulfo,

ou un résidu de formule

(9) 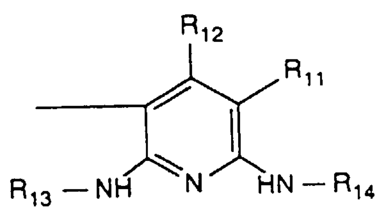

dans laquelle

$R_{11}$ représente un résidu cyano, carbamoyle ou sulfométhyle,
$R_{16}$ représente un groupe alkyle en $C_{1-4}$ et $R_{13}$ et $R_{14}$ représentent, indépendamment l'un de l'autre, un atome d'hydrogène, un résidu réactif de type halogénopyrimidine ou halogénotriazine éventuellement substitué ou un résidu alkyle en $C_{1-12}$ éventuellement substitué par un ou plusieurs résidus hydroxyle, sulfo, ou sulfato, ce résidu alkyle en $C_{1-12}$ pouvant être interrompu, à l'exception du groupe méthyle, par un atome d'oxygène,

ou un résidu de formule

(10) 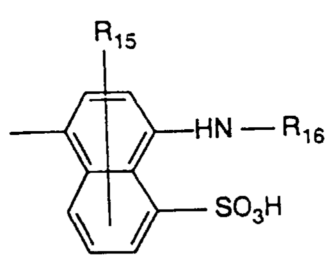

dans laquelle

$R_{15}$ représente un atome d'hydrogène, un groupe alkyle en $C_{1-4}$, alcoxy en $C_{1-4}$, alcanoylamino en $C_{2-4}$, halogéno ou sulfo et
$R_{16}$ représente un groupe phényle pouvant porter un ou plusieurs substituants alkyle en $C_{1-4}$, alcoxy en $C_{1-4}$, alcanoylamino en $C_{2-4}$, halogéno ou sulfo ou un résidu réactif de type halogénopyrimidine ou halogénotriazine portant éventuellement des substituants,

ou un résidu de formule

(11) 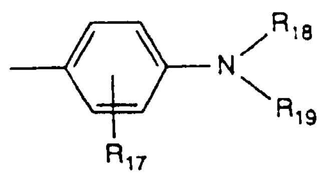

dans laquelle

$R_{17}$ représente un atome d'hydrogène, un groupe alkyle en $C_{1-4}$, alcoxy en $C_{1-4}$, alcanoylamino en $C_{2-6}$, alcoxycarbonylamino en $C_{2-8}$, halogéno ou sulfo, et
$R_{18}$ et $R_{19}$ représentent, indépendamment l'un de l'autre, un atome d'hydrogène, un résidu réactif de type halogénopyrimidine ou halogénotriazine éventuellement substitué, ou un groupe alkyle en $C_{1-8}$ portant éventuellement un ou plusieurs groupes hydroxy, sulfo, sulfato, phényle ou cycloalkyle, le résidu phényle pouvant porter un ou plusieurs résidus alkyle en $C_{1-4}$, alcoxy en $C_{1-4}$, alcanoylamino en $C_{2-4}$, halogéno ou sulfo et le résidu cycloalkyle en $C_{5-7}$ pouvant porter à son tour un ou plusieurs résidus alkyle en $C_{1-4}$,

ou un résidu de formule

(12) 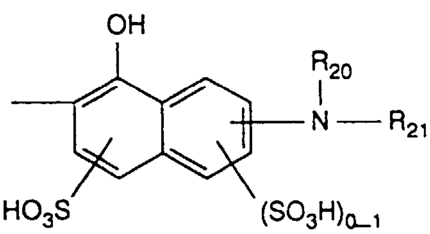

dans laquelle

$R_{20}$ représente un atome d'hydrogène ou un groupe alkyle en $C_{1-4}$, et
$R_{21}$ représente un groupe alcanoyle en $C_{2-6}$, un groupe benzoyle pouvant porter un ou plusieurs substituants alkyle en $C_{1-4}$, alcoxy en $C_{1-4}$, alcanoylamino en $C_{2-4}$, halogéno ou sulfo, ou un un résidu réactif de type halogénopyrimidine ou halogénotriazine éventuellement substitué à son tour.

**2.** Colorants réactifs selon la revendication 1 dans lesquels le résidu $-SO_2Z$ est lié en position 6 ou 7 du composant naphtylène médian.

**3.** Colorants réactifs selon la revendication 1 ou 2 dans lesquels U représente un résidu de formule (2), (2a), (2b) ou (2d).

**4.** Colorants réactifs selon une des revendications 1 à 3 dans lesquels R représente un atome d'hydrogène, W un groupe de formule -CONH- ou -NHCO- et E est un résidu -O- ou -NH-.

**5.** Colorants réactifs selon une des revendications 1 à 4, dans lesquels Y représente un résidu -Cl, $-OSO_3H$, $-SSO_3H$, $-OCO-CH_3$, $-OCO-C_6H_5$ ou $-OPO_3H_2$, en particulier -Cl ou $-OSO_3H$.

**6.** Colorants réactifs selon une des revendications 1 à 5, dans lesquels U est un résidu de formule (2), (2a), (2b) ou (2d), W est un groupe de formule -CONH- ou -NHCO-, R est un atome d'hydrogène, E le résidu -O- ou -NH- et Y un groupe de formule -Cl ou $-OSO_3H$.

**7.** Colorants réactifs selon une des revendications 1 à 6, caractérisés en ce que les colorants réactifs contiennent au moins un groupe sulfo ou sulfato, en particulier au moins un groupe sulfo.

**8.** Procédé de préparation de colorants réactifs selon la revendication 1, caractérisé en ce que l'on soumet une amine

de formule

(13) 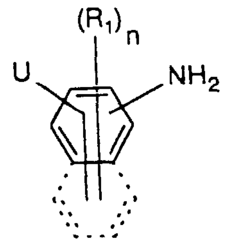

à une diazotation, en ce qu'on copule l'amine diazotée obtenue avec un composé de formule

(14) 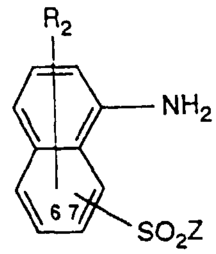

en ce que l'on soumet le produit intermédiaire obtenu à une nouvelle diazotation avant de le copuler avec un composé de formule

(15) H-A

ou alors en ce que l'on soumet directement le produit intermédiaire à une diazotation avant de le copuler avec un composé de formule (15), A, $R_1$, $R_2$, Z, n et U ayant les significations indiquées dans la revendication 1.

**9.** Utilisation des colorants réactifs selon une des revendications 1 à 7 ou des colorants réactifs obtenus conformément à la revendication 8 pour la teinture ou l'impression de matériaux fibreux contenant des groupes hydroxyle ou des atomes d'azote.

**10.** Utilisation selon la revendication 9 pour la teinture ou l'impression de matériaux fibreux contenant de la cellulose ou de matériaux fibreux en polyamide naturel ou synthétique.